# FASCICULE DE BREVET EUROPEEN

(11) **EP 1 013 327 B1**
(45) Date de publication et mention de la délivrance du brevet: **25.05.2005**
(21) Numéro de dépôt: 99403011.2
(22) Date de dépôt: 02.12.1999
(51) Int. Cl.: B01D 29/11, B01D 35/00

(54) **Sachet filtrant à réserve de filtrat**
Filterbeutel mit Filtratreservoir
Filter bag with filtrate reservoir

(30) Priorité: 22.12.1998 FR 9816476
(43) Date de publication de la demande: 28.06.2000
(73) Titulaire: Interlab, 78860 Saint Nom La Bretèche (FR)
(72) Inventeur: Jalenques, François, 78860 Saint Nom La Breteche (FR)
(74) Mandataire: de Saint-Palais, Arnaud Marie

(56) Documents cités:
- WO-A-92/14536
- CA-A- 1 182 758
- FR-A- 2 719 785
- GB-A- 2 199 510

## Description

La présente invention concerne un sachet filtrant à réserve de filtrat, utilisable notamment, mais non exclusivement, à la préparation d'un filtrat à partir d'un échantillon solide, fibreux, non homogène ou insoluble, en vue de son analyse microbiologique.

On sait que ce type d'échantillons ne permet pas d'obtenir directement un filtrat analysable : Il est habituellement nécessaire d'ajouter à cet échantillon, une solution physiologique, d'agiter la solution obtenue pour laver l'échantillon, puis de retirer l'échantillon solide et, au besoin, de diluer la nouvelle solution obtenue. On sépare ensuite la phase liquide et la phase solide par sédimentation et/ou par filtrage.

De nombreuses solutions ont été proposées pour faciliter cette opération de séparation.

Ainsi, l'une de ces solutions consiste à utiliser un sachet, de forme rectangulaire, formé de deux feuilles de matière plastique, solidarisées l'une à l'autre sur trois de leurs côtés. Le volume intérieur du sachet est alors divisé, transversalement, en deux compartiments par une bande filtrante qui s'étend longitudinalement depuis le fond jusqu'à l'ouverture du sachet.

On obtient ainsi deux poches séparées l'une de l'autre par la bande filtrante et qui s'ouvrent au niveau de l'ouverture du sachet. L'une de ces poches est destinée à contenir l'échantillon tandis que l'autre sert à recueillir le filtrat. Pour privilégier l'ouverture de la poche logeant l'échantillon vis-à-vis de la poche de filtrat, la bande filtrante est fixée, sur la paroi du sachet délimitant la poche de filtrat, au niveau d'une portion de surface réduite, au voisinage de l'orifice du sachet.

Il s'avère que cette solution qui se trouve décrite dans le brevet GB 2 199 510, bien que satisfaisante dans une grande majorité des cas, présente néanmoins un certain nombre d'inconvénients.

Tout d'abord, lorsque le sachet est placé dans un malaxeur, la bande filtrante se trouve soumise à l'action mécanique des pales du malaxeur, et risque donc de se détériorer, en outre la matière solide de l'échantillon est appliquée énergiquement contre cette bande, au risque de la colmater.

Par ailleurs, cette solution exclut pratiquement la possibilité de vider la poche contenant l'échantillon sans vider en même temps le filtrat.

L'opération de recueil du filtrat est souvent mal aisée en raison de la difficulté d'introduire un instrument de prélèvement jusque dans le fond de la poche contenant ce filtrat, notamment lorsque l'échantillon contient des matières solides volumineuses.

Un autre inconvénient de cette solution consiste en ce qu'il est impossible de séparer les deux poches du sachet, par exemple pour ne conserver que la poche contenant le filtrat.

Par le brevet CA 1 182 758 et la demande WO 92 14536, on a également proposé des sachets filtrants comprenant un compartiment servant d'entonnoir et un compartiment servant de réserve de filtrat occupant la totalité du fond de la poche, ces deux compartiments étant séparés l'un de l'autre par des moyens de filtrage. Néanmoins, cette solution ne se prête pas à des prélèvements du filtrat depuis l'orifice de l'entonnoir.

L'invention a donc plus particulièrement pour but de supprimer tous ces inconvénients.

Elle propose donc, à cet effet, un sachet filtrant comprenant deux feuilles extérieures en matière plastique solidarisées l'une à l'autre sur une partie de leur périphérie de manière à former une poche ouverte d'un côté par un orifice, et un élément filtrant en forme de feuille disposé de manière à diviser le volume intérieur de la poche en au moins deux compartiments, à savoir : un premier compartiment accessible par ledit orifice et un deuxième compartiment servant à recevoir le filtrat.

Selon l'invention, ce sachet filtrant est caractérisé en ce que le premier compartiment est situé à une distance du fond de la poche et en ce que le second compartiment occupe au moins ladite totalité du fond, des moyens étant en outre prévus pour permettre l'accès d'un dispositif de prélèvement tel qu'une pipette dans ce second compartiment, cet accès s'effectuant au niveau du susdit orifice.

Avantageusement, cet accès pourra être distinct du susdit orifice.

Bien entendu, l'invention se propose de réaliser ce sachet filtrant selon un procédé industriel à cadences de production élevées, avec un coût matière aussi faible que possible.

Un avantage important de la solution selon l'invention consiste en ce qu'il permet de recueillir plus rapidement un volume important de filtrat. En effet, le filtrage s'effectue progressivement pendant toute la période de traitement de l'échantillon et non seulement après celui-ci, au moment du prélèvement, étant entendu que lors d'un filtrage après traitement, le filtre a tendance à se colmater en raison de la présence de particules solides issues du malaxage.

Des modes d'exécution de l'invention seront décrits ci-après, à titre d'exemples non limitatifs, avec référence aux dessins annexés dans lesquels :
Les figures 1 et 2 représentent respectivement en coupe verticale et en vue de côté un sachet filtrant selon un premier mode d'exécution de l'invention ;
Les figures 3 et 4 sont des coupes verticales schématiques montrant deux variantes de sachets réalisés à partir d'une structure tubulaire ;
Les figures 5 et 6 sont des représentations en perspective illustrant le principe de réalisation de sachets filtrants à partir d'un tube de matière plastique souple ;
La figure 7 est une vue schématique illustrant un mode de réalisation d'une paroi filtrante utilisable dans l'exemple de la figure 1 ;
Les figures 8 à 10 sont des coupes transversales d'autres modes d'exécution du sachet filtrant selon l'invention ;
La figure 11 est une vue de face d'un sachet filtrant comprenant une cheminée d'accès latéral au réservoir de filtrat ;
La figure 12 est une coupe transversale du sachet représenté figure 11 ;
La figure 13 est une variante d'exécution dans laquelle un compartiment supérieur du sachet peut être utilisé pour contenir un produit ;
La figure 14 est une coupe transversale d'un sachet filtrant à réservoir de filtrat présentant un grand volume ;
La figure 15 est une vue de face d'un sachet filtrant à réservoir de filtrat détachable ;
La figure 16 est une vue du réservoir de filtrat de la figure 15 à l'état détaché.

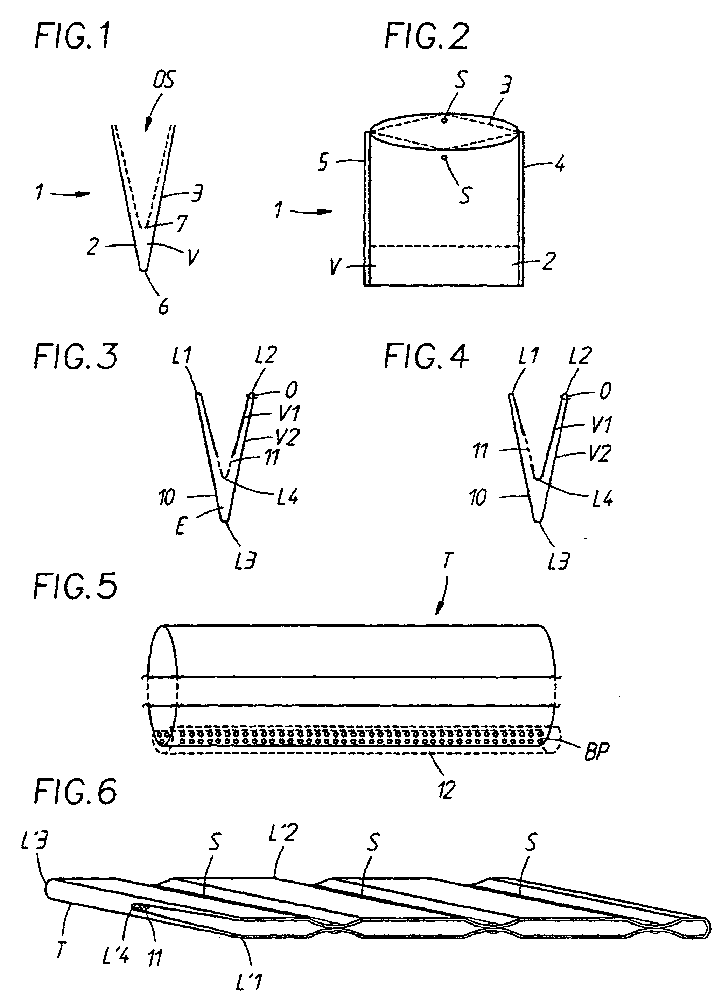

Dans l'exemple illustré sur les figures 1 et 2, le sachet filtrant 1 se compose d'une poche extérieure en matière plastique imperméable 2 et d'une poche intérieure filtrante 3 en matériau poreux logée dans la poche extérieure 2. Ces deux poches 2, 3 sont réalisées à partir de deux bandes respectives repliées sur elles-mêmes, les rabats étant soudés les uns aux autres latéralement, sur toute leur longueur, grâce à deux lignes de soudure latérales 4, 5.

Les deux poches 2, 3 présentent ici une même largeur et s'ouvrent d'un même côté. La poche intérieure 3 présente une longueur inférieure à celle de la poche extérieure, de sorte qu'entre le fond 6 de la poche extérieure 2 et le fond 7 de la poche intérieure 3 il subsiste un volume libre V servant de réservoir de filtrat. Pour faciliter l'accès de l'échantillon à l'intérieur de la poche intérieure 3, un point de soudure S est en outre réalisé entre au moins l'un des couples de plages en regard des poches 2, 3, de préférence au voisinage de l'orifice commun OS des deux poches 2, 3.

Dans cet exemple, l'accès au réservoir de filtrat, par exemple pour un pipetage, s'effectue par l'espace libre compris entre les plages en regard des deux poches 2,3.

Dans les exemples représentés sur les figures 3 à 6, le sachet filtrant est obtenu à partir d'un élément tubulaire 10 réalisé en un film en matière plastique imperméable dont les deux bords latéraux sont reliés l'un à l'autre par une bande poreuse longitudinale 11 qui s'étend sur toute la longueur de l'élément.

Cet élément tubulaire 10 est replié autour d'au moins quatre lignes de pliage longitudinales L₁, L₂, L₃, L₄ de manière à ce que sa section droite présente la forme de deux V emboîtés l'un dans l'autre et solidaires l'un de l'autre au niveau de leurs bordures supérieures (lignes de pliage L₁, L₂). La forme en V intérieure V₁ présente une hauteur inférieure à celle de la forme en V extérieure, de sorte qu'il demeure entre leurs fonds respectifs (lignes L₃, L₄) un espace libre E qui constitue le réservoir de filtrat.

La bande poreuse 11 s'étend alors dans la forme en V intérieure V₁, de préférence au niveau de son fond (ligne de pliage L₄).

La structure tubulaire ainsi repliée est ensuite soudée de place en place, au niveau de zones de soudage transversales S, et découpée le long de lignes de découpes transversales qui s'étendent dans la partie médiane des zones de soudage S.

Dans les exemples représentés sur les figures 3 et 4, l'élément tubulaire 10 est obtenu à partir d'une bande en matière plastique imperméable dont les deux bords latéraux sont reliés l'un à l'autre par l'intermédiaire de la bande poreuse 11. La jonction entre cette bande poreuse 11 et la bande imperméable peut être réalisée à l'aide de deux lignes de soudure.

Dans l'exemple de la figure 3, la bande poreuse 11 est centrée sur la ligne de pliage L₄, tandis que sur la figure 4, la bande 11 est disposée sur un rabat de la forme en V intérieure.

Par contre, dans l'exemple des figures 5 et 6, la structure tubulaire est réalisée par un tube en matière plastique T que l'on replie à plat pour former, au voisinage de l'un des deux plis longitudinaux, une série de perçages constituant une bande longitudinale perforée BP, pouvant éventuellement constituer l'élément de filtrage. Sur cette bande perforée BP peut être ensuite soudée (au niveau de deux lignes de soudure longitudinales) une bande en matériau poreux 12 servant au filtrage.

Le tube ainsi constitué est ensuite replié autour des lignes de pliage L'₁, L'₂, L'₃, L'₄ pour obtenir une forme dont le profil correspond à celui de la figure 2. Des lignes de soudure transversales S sont ensuite réalisées de place en place sur le tube T replié de manière à délimiter les sachets filtrants (figure 6). Ces sachets sont ensuite détachés les uns des autres en effectuant des découpes au niveau des lignes de soudure S.

Dans ces exemples, l'accès au réservoir de filtrat (espace E) par exemple pour un pipetage implique la réalisation d'un orifice O situé de préférence dans la partie supérieure du sachet filtrant, au niveau de la jonction entre la poche intérieure et de la poche extérieure (ligne de pliage L₂).

Un avantage des solutions illustrées sur les figures 3 à 6 consiste en ce que l'on obtient un sachet à double parois dans la région où s'effectue le malaxage. La résistance mécanique de ce sachet se trouve donc considérablement renforcée.

Comme précédemment mentionné, l'invention ne se limite pas à une forme particulière de réalisation du filtre.

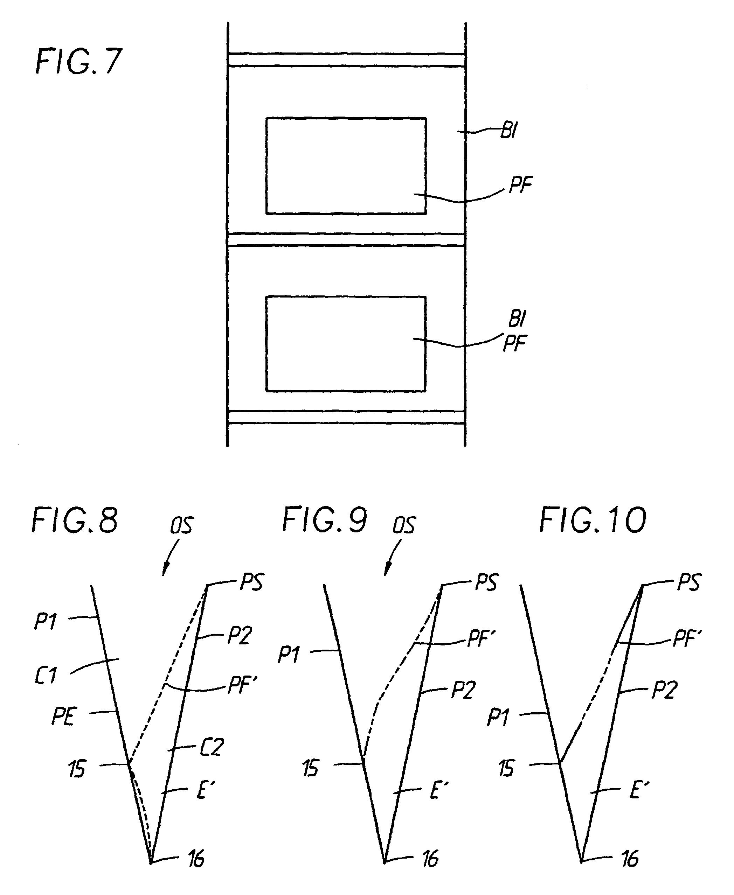

Ainsi, comme illustré sur la figure 7, le filtre pourrait être réalisé à partir d'une bande de matière plastique imperméable BI comportant, dans sa région centrale, un orifice ou même une zone perforée, cette région centrale étant recouverte par une paroi filtrante PF soudée par ses bords sur la bande BI.

L'avantage de cette solution consiste en ce que la paroi filtrante PF peut présenter des dimensions très inférieures à celle de la bande BI et, qu'en conséquence, la soudure de la bande BI dans le sachet peut s'effectuer dans des zones de la bande BI non recouvertes par la paroi filtrante PF.

On évite ainsi une fragilisation du sachet filtrant due à la présence de la paroi filtrante PF au niveau des soudures extérieures (par exemple les soudures 4, 5 ou la soudure S).

Dans les exemples représentés figures 8 à 10, le sachet filtrant se compose d'une poche extérieure PE en matière plastique imperméable dont le volume intérieur est divisé en deux compartiments par une paroi filtrante PF' soudée à l'une des parois du sachet par ses deux bordures latérales et par sa bordure inférieure 15, laquelle s'étend parallèlement, au-dessus du fond 16 du sachet, l'espace E' compris entre la bordure inférieure 15 et le fond 16 délimitant à l'intérieur du sachet un volume servant de réservoir de filtrat. En effet, le compartiment C₁ délimité entre la paroi P₁ du sachet et la paroi filtrante, qui se termine par la soudure 15, est destiné à recevoir l'échantillon à analyser tandis que le compartiment C₂ délimité entre la paroi P₂ et la paroi filtrante PF', qui se termine par le fond 16, reçoit le filtrat et joue donc le rôle de zone réservoir. Ce compartiment C₂ est partiellement refermé au niveau de l'orifice supérieur OS du sachet grâce à un point de soudure PS entre la paroi P₂ et la paroi filtrante PF'. Un espace est néanmoins laissé libre notamment pour le passage d'une pipette servant au prélèvement du filtrat.

Dans les exemples représentés sur les figures 8 et 9, la paroi filtrante PF' est constituée par un filtre qui occupe toute la surface de la paroi PF'. Cette paroi filtrante PF' se termine dans le bas au niveau de la soudure S dans le cas de la figure 9, tandis que sur la figure 8, elle se prolonge au-delà de la soudure 15 jusqu'au fond 16 où elle se trouve soudée aux deux parois P₁, P₂.

Dans l'exemple illustré figure 10, la paroi filtrante est du type de celle illustrée sur la figure 7.

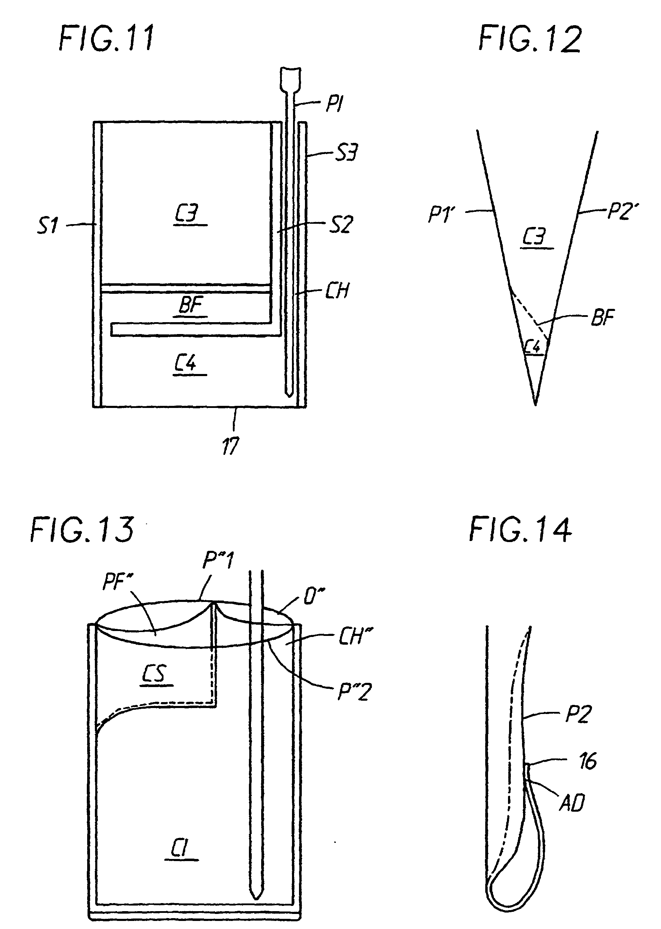

Dans les exemples représentés figures 11 et 12, le volume intérieur du sachet est divisé en deux compartiments, l'un supérieur C₃, l'autre inférieur C₄, par une bande filtrante BF dont les bords longitudinaux qui s'étendent parallèlement au fond 17 sont respectivement soudés aux deux parois du sachet P'₁, P'₂, tandis que les deux bords transversaux sont soudés aux deux soudures latérales du sachet S₁, S₂.

Par ailleurs, le sachet comprend, d'un côté, une soudure latérale supplémentaire S₃ parallèle à la soudure S₂ qui délimite avec les deux parois du sachet une cheminée CH servant pour le passage d'une pipette.

La soudure S₃ s'étend jusqu'au fond 17 tandis que la soudure S₂ s'interrompt au-dessus de ce dernier de manière à obtenir une communication entre le compartiment inférieur C₄ et la cheminée CH.

Le sachet filtrant illustré sur la figure 13 comprend une paroi filtrante PF" dont les bordures latérales et la bordure inférieure sont respectivement soudées aux côtés latéraux et au fond du sachet. Toutefois, dans ce cas, la paroi filtrante PF" est en outre soudée à l'une des parois P"₁ du sachet de manière à obtenir un compartiment supérieur CS s'ouvrant au niveau de l'ouverture O" du sachet. Ce compartiment CS permet l'insertion d'un produit renfermé par exemple dans un petit sac. Dans cet exemple, ce compartiment supérieur CS délimite avec l'un des bords latéral du sachet une cheminée CH' permettant l'accès, au moyen d'une pipette, au compartiment inférieur CI délimité en-dessous du compartiment CS entre la paroi filtrante PF" et la paroi du sachet P"₁. L'échantillon de produit à analyser peut être disposé dans le compartiment compris entre la paroi de sachet P"₂ et la paroi filtrante PF".

Dans les exemples précédemment décrits, la partie inférieure du sachet qui constitue le réservoir de filtrat peut être initialement repliée et fixée temporairement contre l'une des parois du sachet de manière à ce que, lors du malaxage, ce réservoir de filtrat, ainsi qu'éventuellement la paroi filtrante qui le délimite, ne soient pas détériorés par l'action mécanique du malaxeur. Une fois le malaxage effectué, cette partie inférieure du sachet est dépliée de manière à ce que le filtrat puisse venir s'écouler dans le réservoir.

La figure 14 montre un réservoir de structure similaire à celle du sachet représenté figure 9, dans lequel le fond 16 est maintenu repliée contre l'une des parois P₂ du sachet grâce à un adhésif ou à une colle repositionnable AD.

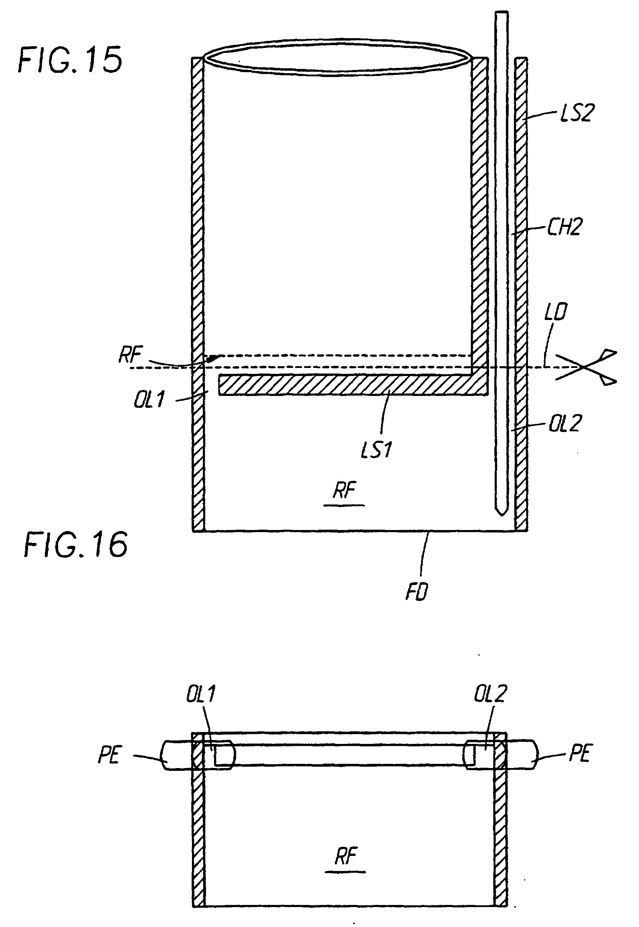

Le sachet représenté sur les figures 15 et 16 présente une structure similaire à celle des figures 1 et 2.

Toutefois, dans ce cas, le réservoir de filtrat RF est refermé par une ligne de soudure LS₁ qui s'étend parallèlement au fond FD, légèrement en-dessous de la paroi filtrante PF, sur une longueur légèrement inférieure à la largeur du sachet, de manière à laisser libre un orifice latéral OL₁ permettant l'écoulement du filtrat dans le réservoir RF. Avantageusement, cet orifice OL₁ pourra être obturé grâce à une pince élastique extérieure PE venant appliquer fermement les deux parois au niveau de l'orifice OL₁.

On obtient ainsi un réservoir étanche en forme de berlingot (figure 16) pouvant se détacher du reste du sachet en effectuant une découpe le long d'une ligne de découpe LD parallèle à la ligne de soudure LS₁, légèrement au-dessus de celle-ci.

Par ailleurs, du côté opposé à l'orifice OL₁, la ligne de soudure LS₁ peut être interrompue pour laisser libre un deuxième orifice OL₂ situé au droit d'une cheminée CH₂ délimitée par une ligne de soudure LS₂ qui s'étend parallèlement à la bordure latérale BL du sachet, depuis la ligne de soudure LS₁ jusqu'à l'orifice du sachet. Cette cheminée CH₂ est destinée à permettre les prélèvements de filtrat par pipetage. Bien entendu, l'orifice OL₂ peut être obturé de la même façon que l'orifice OL₁ de manière à rendre étanche le réservoir de filtrat RF et permettre son détachement de la façon précédemment évoquée.

## Revendications

1. Sachet filtrant à réserve de filtrat comprenant deux feuilles extérieures en matière plastique solidarisées l'une à l'autre sur une partie de leur périphérie de manière à former une poche ouverte d'un côté par un orifice, et un élément filtrant en forme de feuille disposé de manière à diviser le volume intérieur de la poche en au moins deux compartiments, à savoir : un premier compartiment situé à une distance du fond du sachet , ce premier compartiment étant destiné à recevoir un échantillon à analyser et étant accessible par ledit orifice et un deuxième compartiment qui occupe au moins la totalité du fond dudit sachet et qui sert de réserve de filtrat,
**caractérisé en ce que** lesdites feuilles extérieures et/ou ledit élément filtrant sont assemblés de manière à délimiter un passage communiquant avec le second compartiment et débouchant au niveau dudit orifice de manière à permettre l'accès dans ce second compartiment d'un dispositif de prélèvement du filtrat tel qu'une pipette.

2. Sachet selon la revendication 1,
**caractérisé en ce qu'**il comprend une poche extérieure en matière imperméable (2) et une poche intérieure filtrante (3) logée dans la poche extérieure, ces deux poches (2, 3) étant réalisées à partir de deux bandes repliées sur elles-mêmes, les rabats étant soudés les uns aux autres, latéralement sur toute leur longueur, grâce à deux lignes de soudure latérales, la poche intérieure (3) présentant une longueur inférieure à celle de la poche extérieure de sorte qu'entre le fond (6) de la poche extérieure (2) et le fond (7) de la poche intérieure (3), il subsiste un volume libre (V) servant de réservoir de filtrat.

3. Sachet selon la revendication 2,
**caractérisé en ce qu'**un point de soudure (S) est en outre réalisé entre au moins l'un des couples de pliage en regard des poches (2, 3), au voisinage de l'orifice commun (O) des deux poches (2, 3).

4. Sachet selon la revendication 1,
**caractérisé en ce qu'**il est obtenu à partir d'un élément tubulaire (10) réalisé en un film en matière imperméable dont les deux bords latéraux sont reliés l'un à l'autre par une bande poreuse longitudinale qui s'étend sur toute la longueur de l'élément tubulaire.

5. Sachet selon la revendication 4,
**caractérisé en ce que** l'élément tubulaire (10) est replié autour d'au moins quatre lignes de pliage longitudinale (L₁, L₄) de manière à ce que sa section droite présente la forme de deux V emboîtés l'un dans l'autre au niveau de leurs bordures supérieures, la forme en V intérieure (V₁) présentant une hauteur inférieure à celle de la forme en V extérieure, de sorte qu'il demeure entre leurs fonds respectifs (lignes L₃, L₄) un espace libre (E) qui constitue un réservoir de filtrat, la structure tubulaire ainsi repliée étant soudée de place en place au niveau de zones de soudage transversales, et découpées au niveau desdites zones.

6. Sachet selon la revendication 5,
**caractérisé en ce que** la bande poreuse est centrée sur le fond de la forme en V intérieure ou est disposée sur l'un des deux rabats de ladite zone en V intérieure.

7. Sachet selon la revendication 5,
**caractérisé en ce que** la structure tubulaire est réalisée par un tube (T) replié à plat pour former au voisinage de l'un des deux plis longitudinaux, une série de perçages constituant une bande longitudinale perforée sur laquelle est soudée une bande en matériau poreux (12) servant au filtrage.

8. Sachet selon l'une des revendications 4 à 7,
**caractérisé en ce qu'**il comprend un orifice (O) réalisé dans la partie supérieure du sachet, au niveau de la jonction entre la poche intérieure et la poche extérieure (ligne de pliage L₂).

9. Sachet selon l'une des revendications précédentes,
**caractérisé en ce que** le filtre est réalisé à partir d'une bande en matière plastique imperméable (BI) comportant, dans sa région centrale, un orifice ou une zone perforée, cette région centrale étant recouverte par une paroi filtrante (PF) soudée par ses bords sur la bande (BI).

10. Sachet selon la revendication 1,
**caractérisé en ce qu'**il comprend une poche extérieure (PE) en matière plastique imperméable dont le volume intérieur est divisé en deux compartiments par une paroi filtrante (PF') soudée à l'une des parois du sachet par deux lignes de soudure latérales et par une ligne de soudure inférieure (15), ladite bordure inférieure (15) s'étendant parallèlement, au-dessus du fond (16) du sachet, l'espace (E') compris entre la bordure inférieure (15) et le fond (16) servant de réservoir de filtrat.

11. Sachet selon la revendication 10,
**caractérisé en ce que** la paroi filtrante (PF') est reliée à l'une des deux parois du sachet par un point de soudure (PS) situé au niveau de l'orifice supérieur (OS) du sachet.

12. Sachet selon l'une des revendications 10 et 11,
**caractérisé en ce que** la paroi filtrante se prolonge au-delà de la ligne de soudure inférieure (15) jusqu'au fond (16) du sachet où elle se trouve soudée aux deux parois (P₁, P₂) dudit sachet.

13. Sachet selon la revendication 1,
**caractérisé en ce que** son volume intérieur du sachet est divisé en deux compartiments, l'un supérieur (C₃), l'autre inférieur (C₄), par une bande filtrante (BF) dont les bords longitudinaux qui s'étendent parallèlement au fond (17) sont respectivement soudés aux deux parois du sachet (P'₁, P'₂), tandis que les deux bords transversaux sont soudés aux deux soudures latérales du sachet (S₁, S₂).

14. Sachet selon la revendication 13,
**caractérisé en ce qu'**il comprend une soudure latérale supplémentaire (S₃) qui délimite avec l'une des soudures latérales (S₂) une cheminée (CH) débouchant dans le compartiment inférieur (C₄.

15. Sachet selon la revendication 1,
**caractérisé en ce qu'**il comprend une paroi filtrante (PF") dont les bordures latérales et la bordure inférieure sont respectivement soudées aux côtés latéraux et au fond dudit sachet, et **en ce que** la paroi filtrante est en outre soudée à l'une des parois (P"₁) du sachet de manière à obtenir un compartiment supérieur (CS) s'ouvrant au niveau de l'ouverture dudit sachet, ce compartiment délimitant avec l'un des bords latéral du sachet une cheminée (CH) débouchant dans le compartiment inférieur (CI) du sachet, situé en-dessous du compartiment supérieur.

16. Sachet selon l'une des revendications précédentes,
**caractérisé en ce que** la partie inférieure du sachet qui constitue le réservoir de filtrat est repliée et fixée temporairement contre l'une des parois du sachet.

17. Sachet selon l'une des revendications précédentes,
**caractérisé en ce que** le réservoir de filtrat est refermé par une ligne de soudure qui s'étend parallèlement au fond du sachet, légèrement en-dessous de la paroi filtrante (PF), sur une longueur inférieure à la largeur du sac, de manière à laisser libre un orifice latéral (OL₁) permettant l'écoulement du filtrat dans le réservoir.

18. Sachet selon la revendication 17,
**caractérisé en ce que** le réservoir de filtrat est détachable du reste du sachet par une découpe effectuée parallèlement à la ligne de soudure (LS₁), légèrement au-dessus de celle-ci.

19. Sachet selon l'une des revendications 17 à 18,
**caractérisé en ce que** le susdit réservoir est accessible depuis l'orifice du sachet grâce à une cheminée (CH₂) délimitée par deux lignes de soudure, cette cheminée débouchant dans le réservoir par un deuxième orifice (OL₂).

20. Sachet selon l'une des revendications 17 à 19,
**caractérisé en ce que** les susdites orifices (OL₁ et OL₂) sont obturables grâce à une pince élastique.

## Patentansprüche

1. Filterbeutel mit Filterkammer bestehend aus zwei äußeren Plastikfolien, die an den äußeren Enden so miteinander verschweißt sind, dass sie eine Tasche bilden die an einem Ende eine Öffnung hat und aus einem Filterelement in Form einer Folie, die so angeordnet ist, dass sie das innere Volumen der Tasche in mindestens zwei Kammern aufteilt. Eine Kammer befindet sich in einem Abstand zum Boden des Filterbeutels. Diese Kammer ist zur Aufnahme von Proben vorgesehen und ist durch die bereits erwähnte Öffnung zugänglich, die zweite Kammer nimmt mindestens die gesamte Breite des Bodens des erwähnten Filterbeutels ein und dient als Filterkammer, und ist so **gekennzeichnet**, dass die vorgenannten äußeren Folien und/oder das vorgenannte Filterelement derart montiert sind, dass ein Durchgang der mit der zweiten Kammer kommuniziert, abgegrenzt wird und der sich zur vorgenannten Öffnung verengt, um Werkzeugen für Filterproben, wie Pipetten Zugang zur zweiten Kammer zu erlauben.

2. Filterbeutel nach Anspruch 1,
**dadurch gekennzeichnet, dass** er eine äußere Kammer aus undurchlässigem Material (2) enthält und eine innere Filterkammer (3) die sich innerhalb der äußeren Kammer befindet. Diese beiden Kammern (2, 3) bestehen aus zwei um sich selbst gefaltete Bänder, deren Enden seitlich über die gesamte Länge mittels zweier seitlicher Schweißnähte verschweißt sind. Die Länge der inneren Kammer (3) ist gegenüber der Länge der äußeren Kammer (2) kleiner, so dass zwischen dem Boden (6) der äußeren Kammer (2) und dem Boden (7) der inneren Kammer (3) ein freies Volumen (V) verbleibt, das als Filterkammer dient.

3. Filterbeutel nach Anspruch 2,
**dadurch gekennzeichnet, dass** außerdem eine Schweißstelle (S) zwischen mindestens einem der gefalteten Paare der sich gegenüberstehenden Kammern (2, 3) in der Nähe der gemeinsamen Öffnung (O) der beiden Kammern (2, 3) existiert.

4. Filterbeutel nach Anspruch 1,
**dadurch gekennzeichnet, dass** der Aufbau mittels eines röhrenförmigen Elements (10) erreicht wird, das aus einem undurchlässigen Film besteht, dessen seitliche Enden über die gesamte Länge des röhrenförmigen Elements (10) durch längst verlaufende poröse Bänder verbunden ist.

5. Filterbeutel nach Anspruch 4,
**dadurch gekennzeichnet, dass** das röhrenförmige Element (10) mindestens entlang von vier längsseitig verlaufenden Faltstellen (L1, L4) derart gefaltet wird, dass sein vorderer Abschnitt die Form eines Doppel -V annimmt, wobei eines in das andere, entlang ihrer oberen Enden, eingesetzt ist. Die innere V-Form (V1) ist dabei kürzer als die äußere V-Form, so dass zwischen den jeweiligen Böden Falstellen (L3, L4) ein freier Raum (E) entsteht, der die Filterkammer bildet. Die so gefaltete röhrenförmige Struktur ist an definierten, regelmäßig verteilten Stellen in transversalen Schweißzonen verschweißt und an den vorgenannten Stellen abgeschnitten.

6. Filterbeutel nach Anspruch 5,
**dadurch gekennzeichnet, dass** der durchlässige Streifen auf dem Boden der inneren V-Form zentriert ist oder auf einer oder der anderen Seite der vorgenannten inneren V-förmigen Zone angeordnet ist.

7. Filterbeutel nach Anspruch 5,
**dadurch gekennzeichnet, dass** die röhrenförmige Struktur durch ein Röhre (T) geformt wird, die flach gefaltet wird, was in der Nähe der längsseitigen Faltungen eine Reihe von Löchern erlaubt, die einen längsseitigen Streifen bilden, auf den ein durchlässiges Band (12) geschweißt ist, das als Filter dient.

8. Filterbeutel nach Anspruch 4 bis 7,
**dadurch gekennzeichnet, dass** eine Öffnung (O) im oberen Teil des Filterbeutels in der Höhe der Vereinigung der inneren mit der äußeren Kammer (Faltstelle 2) enthalten ist.

9. Filterbeutel nach Anspruch einem der vorherigen Anspruch,
**dadurch gekennzeichnet, dass** der Filter aus einem undurchlässigen Kunststoff (BI) besteht und im zentralen Bereich eine Öffnung oder durchlässige Zone hat. Dieser zentrale Bereich ist mit einer Filterfolie (PF) überdeckt und entlang seiner Enden mit dem Band (BI) verschweißt.

10. Filterbeutel nach Anspruch 1,
**dadurch gekennzeichnet, dass** er aus einer äußeren Kammer (PE) besteht, die aus undurchlässigem Kunststoff aufgebaut ist. Das innere Volumen, das durch eine Filtertrennwand (PF') in zwei Kammern unterteilt ist, ist mit einer Seite der Kammer durch zwei seitliche Schweißnähte und eine untere Schweißnaht (15) verbunden. Die vorgenannte untere Schweißnaht (15) setzt sich parallel zum und über dem Boden (16) des Filterbeutels fort. Das Volumen (E') zwischen dem unteren Ende (15) und dem Boden (16) dient als Filterkammer.

11. Filterbeutel nach Anspruch 10,
**dadurch gekennzeichnet, dass** die Filtertrennwand (PF') mit einer der beiden Wände des Filterbeutels durch eine Schweißstelle (PS) verbunden ist, die auf dem Niveau der Öffnung (OS) des Filterbeutels liegt.

12. Filterbeutel nach Anspruch 10 und 11,
**dadurch gekennzeichnet, dass** sich die Filtertrennwand über die untere Schweißlinie (15) bis zum Boden (16) des Filterbeutels erstreckt und mit den beiden Wänden (P1, P2) des vorgenannten Filterbeutels verschweißt ist.

13. Filterbeutel nach Anspruch 1,
**dadurch gekennzeichnet, dass** das innere Volumen des Filterbeutels in zwei Kammern unterteilt ist, eine obere (C3) und eine untere (C4) und durch einen Filterstreifen (BF) dessen längsseitige Enden sich parallel zum Boden (17) erstrecken, während die beiden seitlichen Enden mit den seitlichen Schweißnähten (S1, S2) des Filterbeutels verschweißt sind.

14. Filterbeutel nach Anspruch 13,
**dadurch gekennzeichnet, dass** er eine zusätzliche seitliche Schweißnaht (S3) aufweist, die zusammen mit einer der seitlichen Schweißnähte (S2) einen Kamin (CH) bildet, der in die untere Kammer (C4) einmündet.

15. Filterbeutel nach Anspruch 1,
**dadurch gekennzeichnet, dass** er eine Filtertrennwand (PF") enthält, deren seitliche Enden und untere Enden mit den seitlichen Enden und dem Boden des vorgenannten Filterbeutels verschweißt sind, und dadurch dass die Filtertrennwand außerdem mit einer Wand (P"1) des Filterbeutels verschweißt ist, um so eine obere Kammeröffnung (CS) an der Öffnung des Filterbeutels zu formen. Die Kammer bildet zusammen mit einem der seitlichen Enden des Filterbeutels einen Kamin (CH), der in die untere Kammer (CI) des Filterbeutels einmündet unterhalb der oberen Kammer liegend.

16. Filterbeutel nach Anspruch einem der vorherigen Ansprüche,
**dadurch gekennzeichnet, dass** der untere Teil des Filterbeutels, der die Filterkammer bildet nach unten gefaltet und temporär an einer der Wände befestigt ist.

17. Filterbeutel nach einem der vorherigen Ansprüche,
**dadurch gekennzeichnet, dass** die Filterkammer durch eine Scheißnaht geschlossen ist, die sich parallel zum Boden des Filterbeutels geringfügig unterhalb der Filtertrennwand (PF) erstreckt und deren Länge geringfügig kürzer ist als die Weite des Filterbeutels, um eine seitliche Öffnung (OL1) zu schaffen und einen Durchgang des Filtrats in die Kammer zu ermöglichen.

18. Filterbeutel nach Anspruch 17,
**dadurch gekennzeichnet, dass** die Filterkammer vom Rest des Filterbeutels durch einen parallelen Schnitt, leicht oberhalb der Schweißnaht (LS1), herausgelöst werden kann.

19. Filterbeutel nach Anspruch 17 bis 18,
**dadurch gekennzeichnet, dass** die oben erwähnte Öffnung mit Hilfe des Kamins (CH2) zugänglich ist. Abgegrenzt durch zwei Schweißnähte mündet dieser Kamin mittels einer zweiten Öffnung (OL2) in der Filterkammer.

20. Filterbeutel nach Anspruch 17 bis19,
**dadurch gekennzeichnet, dass** die oben erwähnten Öffnungen (OL1 und OL2) mit Hilfe eines Kunststoff-Clips verschließbar sind.

## Claims

1. Filter bag with a filtrate compartment consisting of two outer sheets of plastic material welded to each other along part of their outer edge in such a way as to form a pocket open at one end by an orifice, and a filtering element in the form of a sheet disposed so as to divide the inner volume of the pocket in at least two compartments, i.e. one compartment situated at a distance from the bottom of the bag, this first compartment being designed to contain a sample to be analysed and accessible through the aforementioned orifice and a second compartment occupying at least the entire width of the bottom of the aforementioned bag and which serves as a filtrate compartment,
**characterised in that** the aforementioned outer sheets and/or the aforementioned filtering element are assembled so as to define a passageway communicating with the second compartment and emerging at the aforementioned orifice so as to enable a filtrate sampling device such as a pipet to gain access to the second compartment.

2. Filter bag according to claim 1,
**characterised in that** it includes an outer pocket made from impervious materials (2) and an inner filtering pocket (3) located inside the outer pocket, these two pockets (2, 3) being made from two strips folded back on themselves, the edges being welded to each other laterally along their entire length by two lateral welding lines, the length of the inner pocket (3) being inferior to that of the outer pocket (2) in such a way that between the bottom (6) of the outer pocket (2) and the bottom (7) of the inside pocket (3) there remains a free volume (V) acting as a filtrate compartment.

3. Filter bag according to claim 2,
**characterised in that** a welding point (S) is furthermore made between at least one of the folded pairs of opposing pockets (2, 3), close to the common orifice (O) of the two pockets (2, 3).

4. Filter bag according to claim 1,
**characterised in that** it is obtained from a tubular element (10) made from an impervious film both side edges of which are connected by a longitudinal porous strip extending along the whole length of the tubular element (10).

5. Filter bag according to claim 4,
**characterised in that** the tubular element (10) is folded along at least four longitudinal folding lines (L1, L4) so that its frontal section is in the form of two Vs placed one inside the other along their upper edges, the inner V shape (V1) being shorter than the outer V shape, so as to leave between their respective bottoms a free space (E) which constitutes a filtrate compartment, the tubular structure thus folded being welded in successive defined places in transversal welding areas, and cut off in the aforementioned areas.

6. Filter bag according to claim 5,
**characterised in that** the porous strip is centred on the bottom of the inner V shape or is disposed on one side or the other side of the aforementioned inner V-shaped area.

7. Filter bag according to claim 5,
**characterised in that** the tubular structure is formed by a tube (T) folded flat so as to allow, in the vicinity of one of the longitudinal folds, a series of holes forming a longitudinal perforated strip onto which a strip of porous material (12) acting as a filter is welded.

8. Filter bag according to one of claims 4 to 7,
**characterised in that** it includes an orifice (O) formed in the upper part of the bag, level with the join between the inner pocket and the outer pocket (fold line L2).

9. Filter bag according to one of the previous claims,
**characterised in that** the filter is made from a strip of impervious plastic (BI) having, in its central area, an orifice or perforated zone, this central area being covered by a filtering sheet (PF) welded along its edges onto the strip (BI).

10. Filter bag according to claim 1,
**characterised in that** it consists of an outer pocket (PE) made from impervious plastic material the inside volume of which is divided in two compartments by a filtering partition (PF') welded to one of the sides of the bag by two lateral welding lines and by a lower welding line (15), the aforementioned lower weld (15) extending parallel to and above the bottom (16) of the bag, the space (E') contained between the lower edge (15) and the bottom (16) acting as a filtrate compartment.

11. Filter bag according to claim 10,
**characterised in that** the filtering partition (PF') is linked to one of the two walls of the bag by a welding point (PS) situated level with the upper orifice (OS) of the bag.

12. Filter bag according to claims 10 and 11,
**characterised in that** the filtering partition extends beyond the lower welding line (15) to the bottom (16) of the bag where it is welded to the two walls (P1, P2) of the aforementioned bag.

13. Filter bag according to claim 1,
**characterised in that** the inner volume of the bag is divided in two compartments, one upper (C3) and the other lower (C4), by a filtering strip (BF) of which the longitudinal edges extending parallel to the bottom (17) of the bag are respectively welded to the two walls of the bag (P'1, P'2), whereas the two transversal edges are welded to the two lateral welds of the bag (S1, S2).

14. Filter bag according to claim 13,
**characterised in that** it comprises an extra lateral weld (S3) which defines, along with one of the lateral welds (S2), a chimney (CH) emerging in the lower compartment (C4).

15. Filter bag according to claim 1,
**characterised in that** it includes a filtering partition (PF") of which the lateral edges and the lower edge are respectively welded to the lateral edges and the bottom of the aforementioned bag, and **in that** the filtering partition is furthermore welded to one of the side walls (P"1) of the bag so as to form an upper compartment (CS) opening at the orifice of the aforementioned bag, the compartment defining, together with one of the lateral edges of the bag, a chimney (CH) emerging in the lower compartment (CI) of the bag, situated below the upper compartment.

16. Filter bag according to one of the previous claims,
**characterised in that** the lower part of the bag constituting the filtrate compartment is folded upwards and fixed temporarily to one of the walls of the bag.

17. Filter bag according to one of the previous claims,
**characterised in that** the filtrate compartment is closed by a welded line extending parallel to the bottom of the bag, slightly below the filtering partition (PF), whose length is slightly less than the width of the bag, so as to leave open a lateral orifice (OL1) enabling the passage of the filtrate into the compartment.

18. Filter bag according to claim 17,
**characterised in that** the filtrate compartment can be detached from the rest of the bag by a cut performed parallel to and slightly above the welded line (LS1).

19. Filter bag according to one of claims 17 to 18,
**characterised in that** the above-mentioned orifice is accessible from the opening of the bag through a chimney (CH2) defined by two welded lines, this chimney emerging in the filtrate compartment through a second orifice (OL2).

20. Filter bag according to one of claims 17 to 19,
**characterised in that** the above-mentioned orifices (OL1 and OL2) can be obtured using a plastic clip.
